# EUROPÄISCHE PATENTSCHRIFT

(11) **EP 2 491 761 B1**
(45) Veröffentlichungstag und Bekanntmachung des Hinweises auf die Patenterteilung: **30.04.2014**
(21) Anmeldenummer: 10762653.3
(22) Anmeldetag: 01.10.2010
(51) Int. Cl.: H05B 7/14

(54) **VERBINDUNGSSTÜCK AUS EINEM VERBUNDSTOFF AUS GRAPHIT UND CARBONFASERVERSTÄRKTEM KOHLENSTOFF**
CONNECTION PIECE MADE OF A COMPOSITE OF GRAPHITE AND CARBON-FIBER-REINFORCED CARBON
PIÈCE DE LIAISON À BASE D'UN PRODUIT COMPOSITE EN GRAPHITE ET EN CARBONE RENFORCÉ DE FIBRES DE CARBONE

(30) Priorität: 23.10.2009 US 254485 P
(43) Veröffentlichungstag der Anmeldung: 29.08.2012
(73) Patentinhaber: SGL Carbon SE, 65201 Wiesbaden (DE)
(72) Erfinder: MONTMINY, John, Mooresville, NC 28117 (US)
(86) Internationale Anmeldenummer: PCT/EP2010/064677
(87) Internationale Veröffentlichungsnummer: WO 2011/047947

(56) Entgegenhaltungen:
- EP-A2- 0 453 073
- US-A1- 2007 025 411
- US-A1- 2007 280 327
- US-A1- 2008 247 440

## Beschreibung

Die vorliegende Erfindung betrifft ein Verbindungsstück zum Verbinden von Graphitelektroden.

Elektroden auf Basis von Kohlenstoff werden unter anderem in elektrothermischen Verfahren und insbesondere bei der Stahlherstellung in elektrischen Lichtbogenöfen zum Schmelzen von Schmelzgut eingesetzt. Aufgrund der guten Wärmeleitfähigkeit, des geringen elektrischen Widerstandes, der hohen Temperaturschockfestigkeit und der chemischen Beständigkeit von Graphit, werden für diesen Zweck insbesondere Graphitelektroden eingesetzt.

Bei der Verwendung in einem Lichtbogenofen wird an die Graphitelektrode eine elektrische Spannung angelegt, infolge dessen ein von dem unteren Ende der Graphitelektrode zu dem Schmelzgut führender Lichtbogen erzeugt wird, welcher ausreichend hohe Temperaturen von beispielsweise 1.500°C erzeugt, um das Schmelzgut, beispielsweise Stahlschrott oder Eisenschwamm, zum Schmelzen zu bringen. Aufgrund der hohen Temperaturen innerhalb des Lichtbogenofens und durch den Lichtbogen verursacht, brennt das untere Ende der Graphitelektrode langsam ab, so dass die Graphitelektrode verbraucht wird. Aus diesem Grund wird bei dieser Anwendung üblicherweise ein Elektrodenstrang eingesetzt, welcher aus einer Vielzahl von miteinander verbundenen Graphitelektroden besteht, wobei der Elektrodenstrang in dem Ausmaß in den Lichtbogenofen nachgeschoben wird, in dem das untere Elektrodenende während des Ofenbetriebs abbrennt. Sobald der Elektrodenstrang eine festgelegte Mindestlänge unterschreitet, wird bzw. werden an das obere Ende des Elektrodenstranges ein oder mehrere neue Elektroden angeschraubt.

Die einzelnen Elektroden des Elektrodenstranges sind miteinander über Verbindungsstücke, welche auch als Nippel bezeichnet werden und üblicherweise aus Graphit zusammengesetzt sind, mechanisch und elektrisch leitend verbunden. Dabei weisen die einzelnen, herkömmlicherweise zylindrischen Elektroden zur Aufnahme der Verbindungsstücke an ihren beiden Stirnseiten jeweils eine mit einem Innengewinde versehene Vertiefung bzw. Gewindeschachtel mit einer Geometrie auf, welche zu der Außenkontur des Verbindungsstücks komplementär ist. In die Gewindeschachteln wird jeweils ein mit einem Außengewinde versehenes Verbindungsstück eingeschraubt, um die beiden Elektroden jeweils über ihre Stirnseiten miteinander zu verbinden. Dabei sind die Verbindungsstücke üblicherweise doppelkegelstumpfförmig bzw. in der Form eines Bikonus oder zylinderförmig ausgebildet.

Bei dem Betrieb eines Lichtbogenofens wird der Elektrodenstrang mechanisch, thermisch und elektrisch stark beansprucht. Beispielsweise treten bei starken Inhomogenitäten in der Stahlschmelze, etwa durch darauf schwimmende Schrottteile verursacht, starke Biegekräfte an dem Elektrodenstrang auf, die zu einem Bruch der Verbindungsstücke oder der Elektroden führen können.

Zudem nimmt der Durchmesser des Graphitelektrodenstrangs bei dem Betrieb eines Lichtbogenofens aufgrund von Seitenwandoxidation ab, infolge dessen sich insbesondere der Durchmesser des dem Stahlschmelzebad zugewandten Endes des Elektrodenstrangs stark verringert. Wie dargelegt, werden die Elektroden bei dem Betrieb eines Lichtbogenofens verbraucht, infolge dessen einzelne Verbindungsstücke an das Schmelzebadniveau herabsinken. Dadurch entstehen beträchtliche thermische Gradienten in den Elektrodenverbindungen, welche zu erheblichen Umfangsspannungen an den Wänden der Gewindeschächte führen, wodurch wiederum Risse in den Wänden der Gewindeschächte erzeugt werden. Je dünner die Wände der Gewindeschächte aufgrund von Oxidation werden, desto größer werden die Umfangsspannungen. Bei dickeren Gewindeschachtwänden, d.h. bei der Verwendung kleinerer Nippel, treten kleinere Umfangsspannungen auf.

Aus diesem Grund ist es wünschenswert, die Wände der Gewindeschächte dicker auszugestalten, das heißt entweder die Elektrodendurchmesser bei gleichem Gewindeschachtdurchmesser zu vergrößern oder die Gewindeschachtdurchmesser bei gleichem Elektrodendurchmesser zu verringern. Allerdings ist der Außendurchmesser von Graphitelektroden im Allgemeinen durch die geplante Verwendung vorgegeben, so dass eine Vergrößerung des Elektrodendurchmessers nicht in Betracht kommt. Eine Verringerung des Gewindeschachtdurchmessers würde andererseits die mechanische Festigkeit der Verbindungen insbesondere in dem oberen Teil des Elektrodenstrangs stark verringern, weil dann Verbindungsstücke bzw. Graphitnippel mit einem kleineren Durchmesser eingesetzt werden würden, welche naturgemäß eine geringere Festigkeit als solche mit einem größeren Durchmesser aufweisen. Dies würde wiederum die Wahrscheinlichkeit für einen Bruch in dem oberen Bereich des Elektrodenstrangs erhöhen, woraufhin der gebrochene Elektrodenstrang in die Schmelze fallen würde, was erhebliche Produktionsausfälle nach sich ziehen würde.

Um die mechanische Festigkeit von derartigen Verbindungsstücken zu erhöhen, sind bereits, beispielsweise in der EP 1 460 883 A2, als Alternative zu aus Graphit bestehenden Nippeln Nippel aus mit Kohlenstofffasem verstärktem Graphit vorgeschlagen worden, in denen 0,2 bis 10 % Kohlenstofffasern, deren Oberfläche oxidativ aktiviert worden und zudem mit einer carbonisierten Beschichtung versehen worden ist, in einer Graphitmatrix homogen verteilt sind. Allerdings ist die mechanische Festigkeit dieser Nippel nicht ausreichend hoch, so dass der Durchmesser der Nippel, um die vorgenannten Probleme zu überwinden, nicht verringert werden kann, ohne dass die mechanische Festigkeit der Nippel unzureichend wird.

Aufgabe der vorliegenden Erfindung ist es daher, ein Verbindungsstück auf Basis von Graphit bereitzustellen, welches eine verbesserte mechanische Festigkeit aufweist, so dass dieses Graphitelektroden zu einem für den Einsatz in einem Lichtbogenofen ausreichend stabilen Elektrodenstrang verbinden kann, und zwar insbesondere auch dann, wenn das Verbindungsstück einen geringeren Durchmesser aufweist, als dies für die aus dem Stand der Technik bekannten Verbindungsstücke notwendig ist.

Erfindungsgemäß wird diese Aufgabe gelöst durch die Bereitstellung eines Verbindungsstücks zum Verbinden von Graphitelektroden, welches wenigstens einen Bereich aus Graphit und wenigstens einen Bereich aus carbonfaserverstärktem Kohlenstoff umfasst, wobei der Graphit weniger als 10 Massen-% Fasern enthält und der carbonfaserverstärkte Kohlenstoff mehr als 20 Massen-% Carbonfasern enthält.

Diese Lösung basiert auf der überraschenden Erkenntnis, dass ein derartiges Verbindungsstück aus einem Verbundstoff, bei dem ein einzelner Bereich oder mehrere einzelne Bereiche aus einem Material aus carbonfaserverstärktem Kohlenstoff (CFC) mit einem Massenanteil von Carbonfasern von mehr als 20 % bestehen und der bzw. die übrigen Bereiche aus Graphit (mit einem Fasergehalt von weniger als 10 Massen-%) zusammengesetzt sind, im Vergleich zu den aus dem Stand der Technik bekannten Graphitnippeln, und zwar insbesondere auch im Vergleich zu denen, in denen die Kohlenstofffasern über den gesamten Nippel homogen verteilt sind, eine beträchtlich höhere mechanische Festigkeit, insbesondere eine höhere Zugfestigkeit und eine höhere Biegefestigkeit, aufweist. Zudem tritt überraschenderweise keine Delamination der einzelnen Bereiche auf, obwohl diese einen voneinander verschiedenen thermischen Ausdehnungskoeffizienten aufweisen. Aufgrund dessen ist das erfindungsgemäße Verbindungsstück hervorragend zum Verbinden von Graphitelektroden zu einem Elektrodenstrang geeignet. Insbesondere kann das erfindungsgemäße Verbindungsstück für diese Anwendung aufgrund seiner ausgezeichneten mechanischen Festigkeit mit einem vergleichsweise geringen Durchmesser eingesetzt werden, nämlich insbesondere mit einem halb so großen Durchmesser wie dem für die aus dem Stand der Technik bekannten Graphitnippel zum Erreichen einer ausreichenden Festigkeit mindestens erforderlichen Durchmesser. Aufgrund dessen können mit dem erfindungsgemäßen Verbindungsstück Graphitelektroden mit einem einen entsprechend geringeren Durchmesser aufweisenden Gewindeschacht zu einem für die Verwendung in einem Lichtbogenofen ausreichend stabilen Elektrodenstrang verbunden werden. Wegen des geringeren Durchmessers der Gewindeschächte können die Umfangsspannungen in den Wänden der in den Elektroden vorgesehenen Gewindeschächte und infolge dessen Rissbildungen in den Wänden der Gewindeschächte und daraus resultierende Materialverluste bei der Verwendung der Elektroden in einem Elektrodenstrang in einem Lichtbogenofen erheblich verringert werden.

Erfindungsgemäß umfasst das Verbindungsstück einen oder mehrere Bereich(e) bzw. Domäne(n) aus Graphit, wobei der Graphit, sofern dieser überhaupt Fasern enthält, weniger als 10 Massen-% Fasern enthält, und einen oder mehrere Bereich(e) bzw. Domäne(n) aus CFC, wobei das CFC-Material mehr als 20 Massen% Carbonfasern enthält. Vorzugsweise enthält der wenigstens eine Bereich aus Graphit weniger als 5 Massen-% Fasern und ganz besonders bevorzugt gar keine Fasern, wohingegen das CFC-Material bevorzugt wenigstens 30 Massen-% Carbonfasern enthält.

Mithin umfasst das erfindungsgemäße Verbindungsstück faserreiche Bereiche und faserarme bzw. faserlose Bereiche. Dabei können die einzelnen Bereiche jede beliebige Geometrie aufweisen und untereinander beliebig angeordnet sein, solange diese aneinandergrenzen. Allerdings ist es bevorzugt, dass der bzw. die Bereich(e) aus CFC-Material zumindest teilweise von dem bzw. den Bereich(en) aus Graphit umschlossen sind.

Die letztgenannte Ausführungsform kann so veranschaulicht werden, dass das erfindungsgemäße Verbindungsstück wenigstens einen Graphitkörper umfasst, in dem wenigstens eine Aussparung vorgesehen ist, wobei in der wenigstens einen Aussparung ein Material aus carbonfaserverstärktem Kohlenstoff vorgesehen ist, wobei der Graphit weniger als 10 Massen-% Fasern enthält und der carbonfaserverstärkte Kohlenstoff mehr als 20 Massen-% Carbonfasern enthält. Vorzugsweise ist die wenigstens eine Aussparung vollständig mit dem CFC-Material befüllt bzw. ausgefüllt. Dabei kann die wenigstens eine Aussparung von vornherein in dem Graphitkörper vorgesehen sein, beispielsweise indem dieser bei der Herstellung zu einer entsprechenden Form geformt wird, oder die wenigstens eine Aussparung kann nachträglich in den Graphitkörper eingebracht werden, beispielsweise indem in einen zylinderförmigen Graphitkörper nutförmige Aussparungen eingefräst werden.

Um eine feste Verbindung zwischen dem Graphitkörper und dem Material aus carbonfaserverstärktem Kohlenstoff zu erreichen, wird es in Weiterbildung des Erfindungsgedankens vorgeschlagen, dass das in der wenigstens einen Aussparung vorgesehene Material aus carbonfaserverstärktem Kohlenstoff mit dem Graphitkörper über ein Bindemittel verbunden ist. Hierzu kann das Material aus dem carbonfaserverstärkten Kohlenstoff zu der Form der Aussparung bearbeitet werden und dann zusammen mit einem Bindemittel, beispielsweise indem das Material aus dem CFC an seinen Außenflächen mit dem Bindemittel beschichtet ist, in die Aussparung des Graphitkörpers eingesetzt werden, bevor das so erhaltene Verbindungsstück einer Wärmebehandlung bei beispielsweise 100 bis 300°C unterworfen wird, um das CFC-Material fest mit dem Graphitkörper zu verbinden.

Grundsätzlich kann für diesen Zweck jedes Bindemittel auf Basis eines kohlenstoffhaltigen Materials eingesetzt werden, wobei gute Ergebnisse insbesondere erhalten werden, wenn das Bindemittel aus der Gruppe ausgewählt ist, welche aus Phenolharzen, Pechen, Furanharzen, Phenylestern und beliebigen Mischungen von zwei oder mehr der vorgenannten Verbindungen besteht.

Das in der wenigstens einen Aussparung des Graphitkörpers vorgesehene Material aus carbonfaserverstärktem Kohlenstoff ist aus einer Kohlenstoffmatrix zusammengesetzt, in welcher Carbonfasern enthalten sind. Als Ausgangsmaterial für die Matrix des CFC-Materials können kohlenstoffhaltige Materialien, insbesondere solche ausgewählt aus der Gruppe bestehend aus Phenolharzen, Pechen, Furanharzen, Phenylestern und beliebigen Mischungen von zwei oder mehr der vorgenannten Verbindungen, eingesetzt werden, wohingegen als Ausgangsmaterial für die Carbonfasern bevorzugt Pech, Polyacrylnitril, peroxidiertes Polyacrylnitril oder Cellulose eingesetzt wird. Es können auch Fasermischungen aus den vorstehenden Materialien oder Bifilamente aus zwei oder mehr der vorstehend genannten Ausgangsmaterialien eingesetzt werden.

Bei den Carbonfasern kann es sich um Endlosfasern oder um Stapelfasern, welche beispielsweise eine Länge zwischen 5 und 250 mm und bevorzugt zwischen 5 und 100 mm aufweisen, handeln. Ebenso gut ist es möglich, dass die Carbonfasern in der Form von Faserbündeln, Gewirken, Gestricken, Vliesen, Geflechten oder Gelegen, entweder unidirektional oder multiaxial angeordnet, vorliegen.

Gemäß einer weiteren besonders bevorzugten Ausführungsform der vorliegenden Erfindung sind die Carbonfasern des CFC-Materials in der Form eines Gewebes ausgebildet oder ganz besonders bevorzugt in der Form eines Gewebelaminats ausgebildet, in dem mehrere Gewebeschichten übereinander angeordnet und miteinander verbunden sind. Diese CFC-Gewebematerialien weisen vorzugsweise eine 3-Punkt-Biegefestigkeit von wenigstens 150 MPa, besonders bevorzugt von wenigstens 200 MPa und ganz besonders bevorzugt von wenigstens 250 MPa auf.

Solche Gewebelaminate können beispielsweise hergestellt werden, indem aus carbonisierten und/oder graphitierten Fasern, insbesondere Endlosfasern, Gewebe hergestellt werden, welche dann mit einem Harz zu Prepregs imprägniert werden, bevor mehrere Prepregs übereinander laminiert werden. Dabei können die einzelnen Prepregs beispielsweise parallel oder um 90° gegeneinander verdreht aufeinander angeordnet werden. Anschließend wird das Laminat verpresst, ausgehärtet, carbonisiert und optional graphitiert. Dabei wird die Carbonisierung vorzugsweise bei einer Temperatur zwischen 600 und 1.200°C durchgeführt und die optionale Graphitierung bei einer Temperatur zwischen 1.800 und 3.000 sowie besonders bevorzugt zwischen 2.000 und 2.500°C durchgeführt. Nach der Carbonisierung und vor der optionalen Graphitierung kann das Laminat optional ein- oder mehrmals, beispielsweise 3- oder 4-mal, mit einem Harz oder Pech imprägniert werden, wobei nach den einzelnen Imprägnierschritten jeweils eine erneute Carbonisierung durchgeführt wird. Auch bei dieser Ausführungsform wird als Bindemittel bzw. Matrixmaterial vorzugsweise Phenolharz, Pech, Furanharz und/oder Phenylester eingesetzt und als Ausgangsmaterial für die Carbonfasern vorzugsweise Pech, Polyacrylnitril, peroxidiertes Polyacrylnitril oder Cellulose eingesetzt.

In Weiterbildung des Erfindungsgedankens wird es vorgeschlagen, dass das CFC-Material eine Dichte zwischen 1,2 und 1,8 g/cm³, besonders bevorzugt zwischen 1,4 und 1,6 g/cm³ und ganz besonders bevorzugt von etwa 1,5 g/cm³ aufweist.

Vorzugsweise beträgt der Massenanteil der Carbonfaserin dem Material aus carbonfaserverstärktem Kohlenstoff mehr als 20 bis 80 %, besonders bevorzugt 30 bis 70 % und ganz besonders bevorzugt 40 bis 60 %, wie beispielsweise etwa 50%.

Grundsätzlich kann die wenigstens eine Aussparung und damit der wenigstens eine Bereich aus CFC-Material an jeder Stelle des Graphitkörpers angeordnet sein und jede denkbare Geometrie aufweisen, wobei es jedoch bevorzugt ist, dass die wenigstens eine Aussparung in der Form einer Nut bzw. eines Schlitzes ausgebildet ist. Besonders bevorzugt erstreckt sich die wenigstens eine Aussparung in der Längsrichtung des Verbindungsstücks, d.h. in der Verbindungsrichtung des Verbindungsstücks, und erstreckt sich in der zu der Längsrichtung des Verbindungsstücks senkrechten Ebene, d.h. quer zu der Längsrichtung des Verbindungsstücks, von der Außenseite des Graphitkörpers nach innen. Mit anderen Worten weist die wenigstens eine Aussparung im Falle eines zylinderförmigen Graphitkörpers eine sich von der Außenumfangsfläche des Graphitkörpers nach innen erstreckende quaderförmige oder keilförmige Form auf.

Im Allgemeinen kann sich die wenigstens eine Aussparung und damit der wenigstens eine Bereich aus CFC-Material über einen beliebig großen Teil der Längsausdehnung des Graphitkörpers, d.h. der Ausdehnung des Graphitkörpers in der Verbindungsrichtung, oder vollständig über die Längsausdehnung des Graphitkörpers erstrecken. Gute Ergebnisse werden insbesondere erhalten, wenn sich die wenigstens eine Aussparung über wenigstens 50 %, bevorzugt wenigstens 70 %, besonders bevorzugt wenigstens 90 % und ganz besonders bevorzugt 100 % der Längsausdehnung des Graphitkörpers erstreckt. Allerdings ist es auch möglich, wenn auch weniger bevorzugt, dass sich die wenigstens eine Aussparung über weniger als 50 % der Längsausdehnung des Graphitkörpers erstreckt.

Wie vorstehend dargelegt, erstreckt sich die wenigstens eine Aussparung und damit der Bereich aus CFC-Material vorzugsweise von der Außenumfangsfläche des Graphitkörpers nach innen. Grundsätzlich ist es möglich, wenn dies auch weniger bevorzugt ist, dass sich die wenigstens eine Aussparung quer durch den Graphitkörper hindurch erstreckt. Allerdings ist es bevorzugt, dass sich die wenigstens eine Aussparung von der Außenseite bzw. der Außenumfangsfläche des Graphitkörpers nicht über die Mittelachse des Graphitkörpers hinaus nach innen erstreckt. Vorzugsweise erstreckt sich die wenigstens eine Aussparung, von der Ebene quer zu der Längsrichtung des Verbindungsstücks aus gesehen, von der Außenseite bzw. der Außenumfangsfläche des Graphitkörpers über 10 bis weniger als 100 %, vorzugsweise 20 bis 80 %, besonders bevorzugt 30 bis 70 %, ganz besonders bevorzugt 40 bis 70 % und höchst bevorzugt etwa 50 % des Abstandes zwischen der Außenseite und der Mittelachse des Graphitkörpers nach innen.

Gemäß einer weiteren bevorzugten Ausführungsform der vorliegenden Erfindung beträgt das Gesamtvolumen aller Aussparungen und damit das Gesamtvolumen des carbonfaserverstärkten Kohlenstoffs bezogen auf das Gesamtvolumen des Verbindungsstücks 5 bis 75 %, bevorzugt 10 bis 50 % und ganz besonders bevorzugt 20 bis 40%.

Bezüglich der Anzahl der Aussparungen bzw. der Bereiche aus carbonfaserverstärktem Kohlenstoff ist das erfindungsgemäße Verbindungsstück nicht beschränkt. Sofern dieses wenigstens zwei Aussparungen aufweist, was bevorzugt ist, sind die einzelnen Aussparungen vorzugsweise in etwa gleich groß und insbesondere gleichmäßig über den Querschnitt des Verbindungsstücks verteilt. Gute Ergebnisse werden insbesondere erhalten, wenn der Graphitkörper 2 bis 50 Aussparungen, besonders bevorzugt 2 bis 32 Aussparungen, ganz besonders bevorzugt 5 bis 32 Aussparungen und höchst bevorzugt 8 bis 24 Aussparungen, beispielsweise 16 oder 24 Aussparungen, aufweist, welche mit dem Material aus carbonfaserverstärktem Kohlenstoff ausgefüllt sind. Vorzugsweise erstrecken sich die einzelnen Aussparungen jeweils keilförmig von der Außenumfangsfläche des Verbindungsstücks nach innen und diese sind bevorzugt in etwa gleich groß und gleichmäßig über den Querschnitt des Verbindungsstücks verteilt.

Obwohl das Verbindungsstück grundsätzlich jede beliebige geometrische Form annehmen kann, ist es bevorzugt, dass dieses zylinderförmig oder besonders bevorzugt in der Form eines Bikonus, das heißt doppelkegelstumpfförmig, wobei die beiden Kegelstümpfe mit ihrer Grundfläche miteinander verbunden sind, ausgebildet ist.

Wie dargelegt, weist das erfindungsgemäß Verbindungsstück im Vergleich zu den aus dem Stand der Technik bekannten Nippeln aus Graphit, in denen Carbonfasern homogen über das gesamte Volumen des Verbindungsstücks verteilt sind, eine höhere mechanische Festigkeit und insbesondere eine höhere Zugfestigkeit und Biegefestigkeit auf. Aus diesem Grund können mit dem erfindungsgemäßen Verbindungsstück Graphitelektroden stabil miteinander verbunden werden, auch und insbesondere, wenn das Verbindungsstück einen im Vergleich zu den aus dem Stand der Technik bekannten Verbindungsstücken geringeren, beispielsweise einen um 25 bis 75 % und insbesondere um wenigstens 50 % geringeren Durchmesser aufweist. Während beispielsweise herkömmliche Verbindungsstücke zum Verbinden von Standardgraphitelektroden mit einer Länge von 2.700 mm und einem Durchmesser von 600 mm einen Durchmesser von 317 mm aufweisen, um eine ausreichend stabile Verbindung der Elektroden zu erreichen, können dieselben Graphitelektroden mit den erfindungsgemäßen Verbindungsstücken mit der gleichen Stabilität verbunden werden, wenn die erfindungsgemäßen Verbindungsstücke einen Durchmesser von 150 mm aufweisen.

Als Ausgangsmaterial für den Graphit für den wenigstens einen Beriech aus Graphit bzw. den Graphitkörper des erfindungsgemäßen Verbindungsstücks kann jeder dem Fachmann bekannte Graphitvorläufer eingesetzt werden, insbesondere eine Mischung aus Koks und Bindemittel. Vorzugsweise weist der eingesetzte Koks eine Partikelgröße von weniger als 10 mm, besonders bevorzugt von weniger als 5 mm und ganz besonders bevorzugt von 0,01 bis 3 mm auf. Als Koks können beispielsweise Pechkoks, metallurgischer Koks oder Petroleumkoks, insbesondere Nadelkoks, eingesetzt werden, wohingegen als Bindemittel bevorzugt Pech eingesetzt wird. Das Mischungsverhältnis zwischen Koks und Bindemittel beträgt vorzugsweise 5:1 bis 2:1 und besonders bevorzugt etwa 4:1. Zu dieser Mischung kann als Additiv eine geringe Menge von 0,1 bis 0,5 Gew.-% Eisenoxid zugegeben werden. In der Mischung können auch Fasern bis zu einem Massenanteil von weniger als 10 % enthalten sein, wobei es jedoch, wie vorstehend dargelegt, bevorzugt ist, dass diese maximal 5 Massen-% und besonders bevorzugt keine Fasern enthält. Die Mischung wird dann beispielsweise durch Extrusion zu der gewünschten Form geformt und dann carbonisiert und graphitiert. Vor dem Graphitieren können ein oder mehrere Imprägnierschritte durchgeführt werden, bei denen der Formkörper mit einem Imprägniermittel, beispielsweise Imprägnierpech, imprägniert wird und anschließend erneut carbonisiert wird. Optional können auch nach der Graphitierung eine oder mehrere (Nach)imprägnierungen jeweils gefolgt von einer Carbonisierung durchgeführt werden.

Ein weiterer Gegenstand der vorliegenden Erfindung ist ein Verfahren zum Herstellen eines zuvor beschriebenen, erfindungsgemäßen Verbindungsstücks, welches die nachfolgenden Schritte umfasst:
i) Bereitstellen eines Graphitkörpers, welcher keine oder weniger als 10 Massen-% Fasern enthält,
ii) Bereitstellen eines Materials aus carbonfaserverstärktem Kohlenstoff, welcher mehr als 20 Massen-% Fasern enthält,
iii) Verbinden des Graphitkörpers mit dem Material aus carbonfaserverstärktem Kohlenstoff mittels eines Bindemittels und
iv) Anbringen eines Gewindes an den in dem Schritt iii) erhaltenen Aufbau.

Vorzugsweise wird das CFC-Material zumindest teilweise von dem Graphitkörper umschlossen. Bei dieser Ausführungsform umfasst das Verfahren vorzugsweise die Schritte:
a) Bereitstellen eines Graphitkörpers, vorzugsweise in der Form eines Zylinders oder eines Bikonus,
b) Vorsehen von wenigstens einer Aussparung in dem Graphitkörper durch Bearbeiten des Graphitkörpers,
c) Bereitstellen eines carbonfaserverstärkten Kohlenstoffs in der Form der wenigstens einen Aussparung,
d) Einbringen eines Bindemittels und des carbonfaserverstärkten Kohlenstoffs in die wenigstens eine Aussparung,
e) Wärmebehandlung des in dem Schritt d) erhaltenen Aufbaus und
f) Anbringen eines Gewindes an den in dem Schritt e) erhaltenen Aufbau.

Zur Bereitstellung des Graphitkörpers gemäß dem Verfahrensschritt a) kann beispielsweise eine Mischung aus einem Bindemittel und Koks zu der Form eines Zylinders oder Bikonus geformt werden und der so erhaltene Körper anschließend carbonisiert und graphitiert werden. Optional kann dabei zwischen dem Formen und dem Graphitieren wenigstens ein Imprägnierschritt mit einem Imprägniermittel, wie beispielsweise Pech, durchgeführt werden. Die Imprägnierung kann beispielsweise unter Vakuum für 2 bis 10 Stunden erfolgen, wobei nach der Imprägnierung vorzugsweise eine Wärmebehandlung beispielsweise zwischen 600 und 1.000°C, insbesondere bei 700 bis 900°C, für beispielsweise 2 bis 10 Stunden, insbesondere 4 bis 6 Stunden, erfolgt.

Die wenigstens eine Aussparung kann in den Verfahrensschritt b) durch jede bekannte Bearbeitungstechnik, beispielsweise durch Fräsen, angebracht werden. Alternativ dazu kann der Graphitkörper bei dem Formschritt beispielsweise durch Extrusion zu einer Form geformt werden, welche bereits die wenigstens eine Aussparung enthält.

In Weiterbildung des Erfindungsgedankens wird es vorgeschlagen, in dem Verfahrensschritt b) in dem Graphitkörper 2 bis 50 Aussparungen, bevorzugt 2 bis 32 Aussparungen, besonders bevorzugt 5 bis 32 Aussparungen und ganz besonders bevorzugt 8 bis 24 Aussparungen vorzusehen, welche vorzugsweise gleichmäßig über den Querschnitt des Verbindungsstücks verteilt sind. Dabei ist es bevorzugt, dass sich die einzelnen Aussparungen in der Längsrichtung des Verbindungsstücks erstrecken und sich, quer zu der Längsrichtung des Verbindungsstücks, von der Außenseite des Verbindungsstücks nach innen erstrecken.

Zur Herstellung des carbonfaserverstärkten Kohlenstoffs in dem Verfahrensschritt c) können Kohlenstofffasern, beispielsweise peroxidierte Polyacrylnitrilfasern, Polyacrylnitrilfasern, Cellulosefasern und/oder Pechfasern, carbonisiert und/oder graphitiert werden, bevor die so erhaltenen Carbonfasern besonders bevorzugt zu einem Gewebe oder einem Gewebelaminat verarbeitet werden, welches anschließend mit einem Bindemittel imprägniert wird, bevor das so erhaltene Gebilde carbonisiert und ggf. graphitiert wird. Dabei wird beispielsweise als Bindemittel eines eingesetzt, welches aus der aus Phenolharzen, Pechen, Furanharzen, Phenylestern und beliebigen Mischungen von zwei oder mehr der vorgenannten Verbindungen bestehenden Gruppe ausgewählt ist.

Auch das in dem Verfahrensschritt d) zusammen mit dem carbonfaserverstärkten Kohlenstoff eingebrachte Bindemittel wird vorzugsweise aus der Gruppe ausgewählt, welche aus Phenolharzen, Pechen, Furanharzen, Phenylestern und beliebigen Mischungen von zwei oder mehr der vorgenannten Verbindungen besteht.

Gemäß einer weiteren bevorzugten Ausführungsform der vorliegenden Erfindung wird die Wärmebehandlung in dem Verfahrensschritt e) bei einer Temperatur zwischen 100 und 300°C durchgeführt.

Ein weiterer Gegenstand der vorliegenden Erfindung ist ein Verbindungsstück, welches mit dem vorstehend beschriebenen erfindungsgemäßen Verfahren erhältlich ist.

Ferner betrifft die vorliegende Erfindung die Verwendung eines zuvor beschriebenen, erfindungsgemäßen Verbindungsstücks zur Verbindung von zwei Elektroden, vorzugsweise von zwei Graphitelektroden, bzw. die Verwendung von mehreren der zuvor beschriebenen, erfindungsgemäßen Verbindungsstücken zur Verbindung von mehreren Elektroden, vorzugsweise von Graphitelektroden, zu einem Elektrodenstrang.

Schließlich betrifft die vorliegende Erfindung einen Elektrodenstrang, welcher zwei oder mehr Graphitelektroden umfasst, von denen jeweils zwei Graphitelektroden durch jeweils ein erfindungsgemäßes Verbindungsstück miteinander verbunden sind.

Nachfolgend wird die vorliegende Erfindung rein beispielhaft anhand vorteilhafter Ausführungsformen unter Bezugnahme auf die beigefügten Zeichnungen beschrieben. Dabei zeigen:
- Fig. 1: eine perspektivische Ansicht eines Verbindungsstücks gemäß eines ersten Ausführungsbeispiels der vorliegenden Erfindung,
- Fig. 2: eine Draufsicht des in der Fig. 1 dargestellten Verbindungsstücks,
- Fig. 3: eine Draufsicht eines Verbindungsstücks gemäß eines zweiten Ausführungsbeispiels der vorliegenden Erfindung und
- Fig. 4: eine perspektivische Ansicht eines Verbindungsstücks gemäß eines dritten Ausführungsbeispiels der vorliegenden Erfindung.

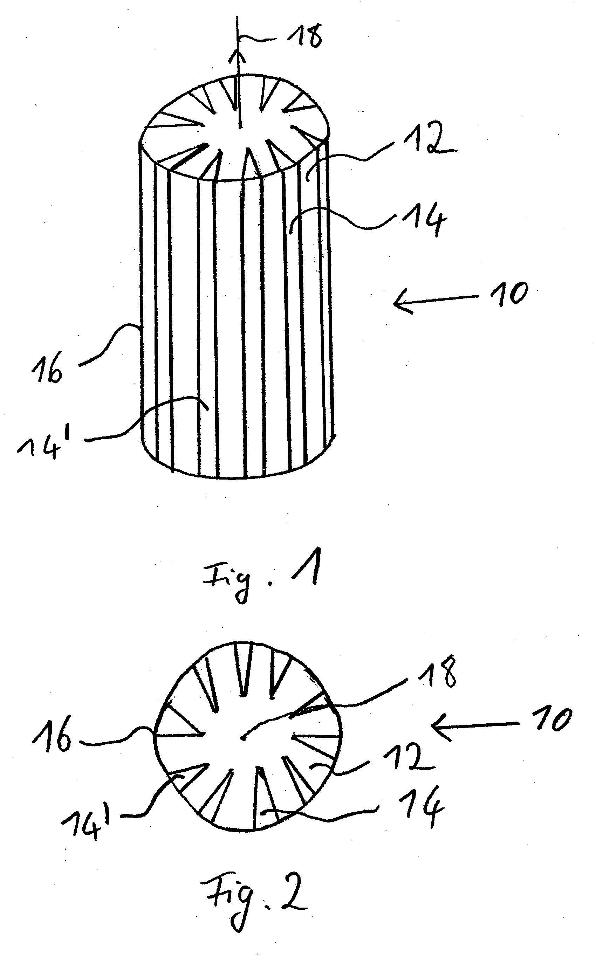

Das in der Figuren 1 und 2 dargestellte Verbindungsstück 10 besteht aus einem Graphitkörper 12, welcher zehn keilförmige Aussparungen 14, 14' aufweist, welche mit einem Material aus carbonfaserverstärktem Kohlenstoff ausgefüllt sind. Dabei erstrecken sich die keilartigen Aussparungen 14, 14' über die gesamte Längsausdehnung des Graphitkörpers 12 und, in der Richtung quer zu der Längsachse des Verbindungselements 10 aus gesehen, von der Außenumfangsfläche bzw. Außenseite 16 des Graphitkörpers 12 über etwa 50 % des Abstandes zwischen der Außenseite 16 und der Mittelachse 18 des Graphitkörpers 12 nach innen.

Während der Graphitkörper 12 aus einem faserfreien Graphit besteht, enthält der carbonfaserverstärkte Kohlenstoff mehr als 20 Massen-% Carbonfasem. Das Material aus carbonfaserverstärktem Kohlenstoff ist mit dem Graphitkörper 12 über ein Bindemittel (nicht dargestellt) verbunden. An der Außenumfangsfläche des Verbindungsstücks 10 ist ein Außengewinde (nicht dargestellt) angebracht.

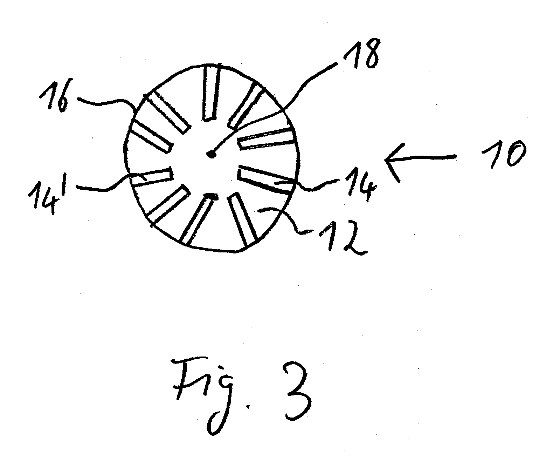

Das in der Figur 3 dargestellte Verbindungsstück 10 unterscheidet sich von dem in den Figuren 2 und 3 dargestellten dadurch, dass die einzelnen mit dem Material aus carbonfaserverstärktem Kohlenstoff befüllten Aussparungen 14, 14' nicht keilförmig, sondern in der Form eines flachen Quaders ausgebildet sind.

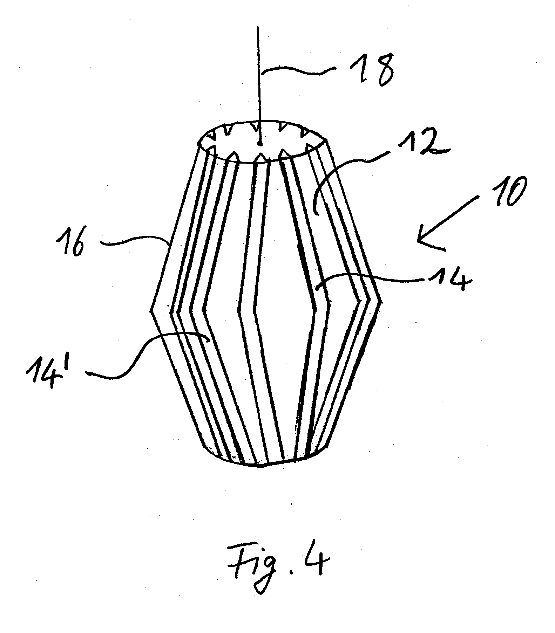

Im Unterschied zu dem in der Figur 1 dargestellten Verbindungsstück 10 ist das in der Figur 4 dargestellte Verbindungsstück in der Form eines Bikonus ausgestaltet, das heißt doppelkegelstumpfförmig, wobei die beiden Kegelstümpfe mit ihrer Grundfläche miteinander verbunden sind. An der Außenumfangsfläche des Verbindungsstücks 10 ist ein Außengewinde (nicht dargestellt) angebracht.

### Bezugszeichen liste

- 10: Verbindungsstück
- 12: Graphitkörper/Bereich aus Graphit
- 14, 14': Aussparungen (ausgefüllt mit CFC-Material)/Bereich aus CFC
- 16: Außenumfangsfläche bzw. Außenseite des Graphitkörpers
- 18: Mittelachse des Graphitkörpers

## Patentansprüche

1. Verbindungsstück (10) zum Verbinden von Graphitelektroden, welches wenigstens einen Bereich (12) aus Graphit und wenigstens einen Bereich (14, 14') aus carbonfaserverstärktem Kohlenstoff umfasst, wobei der Graphit weniger als 10 Massen-% Fasern enthält und der carbonfaserverstärkte Kohlenstoff mehr als 20 Massen-% Carbonfasern enthält.

2. Verbindungsstück (10) nach Anspruch 1,
**dadurch gekennzeichnet, dass**
der Graphit weniger als 5 Massen-% Fasern und bevorzugt keine Fasern enthält.

3. Verbindungsstück (10) nach Anspruch 1 oder 2,
**dadurch gekennzeichnet, dass**
der wenigstens eine Bereich (14, 14') aus carbonfaserverstärktem Kohlenstoff zumindest teilweise von dem wenigstens einen Bereich (12) aus Graphit umschlossen ist.

4. Verbindungsstück (10) nach zumindest einem der vorstehenden Ansprüche,
**dadurch gekennzeichnet, dass**
der wenigstens eine Bereich (12) aus Graphit ein Graphitkörper (12) ist, in dem wenigstens eine Aussparung (14, 14') vorgesehen ist, wobei in der wenigstens einen Aussparung (14, 14') der carbonfaserverstärkte Kohlenstoff vorgesehen ist.

5. Verbindungsstück (10) nach zumindest einem der vorstehenden Ansprüche,
**dadurch gekennzeichnet, dass**
das in der wenigstens einen Aussparung (14, 14') vorgesehene Material aus carbonfaserverstärktem Kohlenstoff mit dem Graphitkörper (12) über ein Bindemittel verbunden ist

6. Verbindu ngsstück (10) nach zumindest einem der vorstehenden Ansprüche,
**dadurch gekennzeichnet, dass**
die Carbonfasern in dem Material aus carbonfaserverstärktem Kohlenstoff in der Form eines Gewebes oder eines Gewebelaminats, in dem mehrere Gewebeschichten übereinander angeordnet und miteinander verbunden sind, vorliegen.

7. Verbindungsstück (10) nach zumindest einem der vorstehenden Ansprüche,
**dadurch gekennzeichnet, dass**
der Massenanteil der Carbonfasern in dem Material aus carbonfaserverstärktem Kohlenstoff mehr als 20 bis 80 %, besonders bevorzugt 30 bis 70 % und ganz besonders bevorzugt 40 bis 60 % beträgt.

8. Verbindungsstück (10) nach zumindest einem der vorstehenden Ansprüche,
**dadurch gekennzeichnet, dass**
sich die wenigstens eine Aussparung (14, 14') in der Längsrichtung des Verbindungsstücks (10) erstreckt und sich, quer zu der Längsrichtung des Verbindungsstücks (10), von der Außenseite (16) des Graphitkörpers (12) nach innen erstreckt.

9. Verbindungsstück (10) nach zumindest einem der vorstehenden Ansprüche,
**dadurch gekennzeichnet, dass**
sich die wenigstens eine Aussparung (14, 14') über wenigstens 50 %, bevorzugt wenigstens 70 %, besonders bevorzugt wenigstens 90 % und ganz besonders bevorzugt 100 % der Längsrichtung des Graphitkörpers (12) erstreckt.

10. Verbindungsstück (10) nach zumindest einem der vorstehenden Ansprüche,
**dadurch gekennzeichnet, dass**
sich die wenigstens eine Aussparung (14, 14'), quer zu der Längsrichtung des Graphitkörpers (12), von der Außenseite (16) des Graphitkörpers (12) über 10 bis weniger als 100 %, vorzugsweise 20 bis 80 %, besonders bevorzugt 30 bis 70 % und ganz besonders bevorzugt 40 bis 70 % des Abstandes zwischen der Außenseite (16) und der Mittelachse (18) des Graphitkörpers (12) nach innen erstreckt.

11. Verbindungsstück (10) nach zumindest einem der vorstehenden Ansprüche,
**dadurch gekennzeichnet, dass**
das Gesamtvolumen aller Aussparungen (14, 14'), bezogen auf das Gesamtvolumen des Verbindungsstücks (10), 5 bis 75 %, bevorzugt 10 bis 50 % und ganz besonders bevorzugt 20 bis 40 % beträgt.

12. Verbindungsstück (10) nach zumindest einem der vorstehenden Ansprüche,
**dadurch gekennzeichnet, dass**
der Graphitkörper (12) 2 bis 50 Aussparungen (14, 14'), bevorzugt 2 bis 32 Aussparungen (14, 14'), besonders bevorzugt 5 bis 32 Aussparungen (14, 14') und höchst bevorzugt 8 bis 24 Aussparungen (14, 14'), aufweist, welche mit dem Material aus carbonfaserverstärktem Kohlenstoff ausgefüllt sind.

13. Verbindungsstück (10) nach zumindest einem der vorstehenden Ansprüche,
**dadurch gekennzeichnet, dass**
dieses zylinderförmig oder in der Form eines Bikonus ausgebildet ist

14. Verfahren zum Herstellen eines Verbindungsstücks (10) nach einem der Ansprüche 1 bis 13, welches die nachfolgenden Schritte umfasst:
i) Bereitstellen eines Graphitkörpers (12), welcher keine oder weniger als 10 Massen-% Fasern enthält,
ii) Bereitstellen eines Materials aus carbonfaserverstärktem Kohlenstoff, welcher mehr als 20 Massen-% Fasern enthält,
iii) Verbinden des Graphitkörpers (12) mit dem Material aus carbonfaserverstärktem Kohlenstoff mittels eines Bindemittels und
iv) Anbringen eines Gewindes an den in dem Schritt iii) erhaltenen Aufbau.

15. Verfahren nach Anspruch 14, umfassend die nachfolgenden Schritte:
a) Bereitstellen eines Graphitkörpers (12), vorzugsweise in der Form eines Zylinders oder eines Bikonus,
b) Vorsehen von wenigstens einer Aussparung (14, 14') in dem Graphitkörper (12) durch Bearbeiten des Graphitkörpers (12),
c) Bereitstellen eines carbonfaserverstärkten Kohlenstoffs in der Form der wenigstens einen Aussparung (14, 14'),
d) Einbringen eines Bindemittels und des carbonfaserverstärkten Kohlenstoffs in die wenigstens eine Aussparung (14, 14'),
e) Wärmebehandlung des in dem Schritt d) erhaltenen Aufbaus und
f) Anbringen eines Gewindes an den in dem Schritt e) erhaltenen Aufbau.

16. Verfahren nach Anspruch 14 oder 15,
**dadurch gekennzeichnet, dass**
die Wärmebehandlung in dem Schritt e) bei einer Temperatur zwischen 100 und 300°C durchgeführt wird.

17. Verwendung eines Verbindungsstücks (10) nach einem der Ansprüche 1 bis 13 zum Verbinden von zwei Elektroden, vorzugsweise von zwei Graphitelektroden.

18. Elektrodenstrang umfassend zwei oder mehr Graphitelektroden, wobei jeweils zwei Graphitelektroden durch ein Verbindungsstück (10) nach einem der Ansprüche 1 bis 13 miteinander verbunden sind.

## Claims

1. A connection piece (10) for connecting graphite electrodes, which encompasses at least one graphite region (12) and at least one carbon-fiber-reinforced carbon region (14, 14'), wherein the graphite contains less than 10 mass percent fibers, and the carbon-fiber-reinforced carbon contains more than 20 mass percent carbon fibers.

2. The connection piece (10) according to claim 1,
**characterized in that**
the graphite contains less than 5 mass percent fibers, and preferably no fibers.

3. The connection piece (10) according to claim 1 or 2,
**characterized in that**
the at least one carbon-fiber-reinforced carbon region (14, 14') is enveloped at least partially by the at least one graphite region (12).

4. The connection piece (10) according to at least one of the preceding claims,
**characterized in that**
the at least one graphite region (12) is a graphite body (12) provided with at least one recess (14, 14'), wherein the carbon-fiber-reinforced carbon is provided in the at least one recess (14, 14').

5. The connection piece (10) according to at least one of the preceding claims,
**characterized in that**
the material comprised of carbon-fiber-reinforced carbon provided in the at least one recess (14, 14') is connected with the graphite body (12) by means of a binder.

6. The connection piece (10) according to at least one of the preceding claims,
**characterized in that**
the carbon fibers are present in the material comprised of carbon-fiber-reinforced carbon in the form of a fabric or a fabric laminate, in which several fabric layers are arranged one on top of the other and connected with each other.

7. The connection piece (10) according to at least one of the preceding claims,
**characterized in that**
the mass fraction of carbon fibers in the material comprised of carbon-fiber-reinforced carbon measures more than 20 to 80%, especially preferably 30 to 70%, and very especially preferred 40 to 60%.

8. The connection piece (10) according to at least one of the preceding claims,
**characterized in that**
the at least one recess (14, 14') extends in the longitudinal direction of the connection piece (10), and extends inwardly from the external side (16) of the graphite body (12) in the longitudinal direction of the connection piece (10).

9. The connection piece (10) according to at least one of the preceding claims,
**characterized in that**
the at least one recess (14, 14') extends over at least 50%, preferably at least 70%, especially preferably at least 90%, and very especially preferred 100% of the longitudinal direction of the graphite body (12).

10. The connection piece (10) according to at least one of the preceding claims,
**characterized in that**
the at least one recess (14, 14') extends inwardly from the external side (16) of the graphite body (12) transverse to the longitudinal direction of the graphite body (12) over 10 to less than 100%, preferably 20 to 80%, especially preferably 30 to 70%, and very especially preferred 40 to 70% of the distance between external side (16) and central axis (18) of the graphite body (12).

11. The connection piece (10) according to at least one of the preceding claims,
**characterized in that**
the total volume of all recesses (14, 14') relative to the total volume of the connection piece (10) measures 5 to 75%, preferably 10 to 50%, and very especially preferred 20 to 40%.

12. The connection piece (10) according to at least one of the preceding claims,
**characterized in that**
the graphite body (12) exhibits 2 to 50 recesses (14, 14'), preferably 2 to 32 recesses (14, 14'), especially preferably 5 to 32 recesses (14, 14'), and most preferably 8 to 24 recesses (14, 14'), which are occupied by the material comprised of carbon-fiber-reinforced carbon.

13. The connection piece (10) according to at least one of the preceding claims,
**characterized in that**
the latter is designed in the form of a cylinder or bicone.

14. A method for manufacturing a connection piece (10) according to one of claims 1 to 13, which encompasses the following steps:
i) Preparing a graphite body (12) containing zero or less than 10 mass percent fibers,
ii) Preparing a material comprised of carbon-fiber-reinforced carbon, which contains more than 20 mass percent fibers,
iii) Connecting the graphite body (12) with the material comprised of carbon-fiber-reinforced carbon by means of a binder, and
iv) Threading the structure obtained in step iii).

15. The method according to claim 14, encompassing the following steps:
a) Preparing a graphite body (12), preferably in the form of a cylinder or bicone,
b) Providing at least one recess (14, 14') in the graphite body (12) by machining the graphite body (12),
c) Preparing a carbon-fiber-reinforced carbon in the form of the at least one recess (14, 14'),
d) Incorporating a binder and the carbon-fiber-reinforced carbon into the at least one recess (14, 14'),
e) Heat treating the structure obtained in step d), and
f) Threading the structure obtained in step e).

16. The method according to claim 14 or 15,
**characterized in that**
the heat treatment is performed in a step e) at a temperature of between 100 and 300°C.

17. Use of a connection piece (10) according to one of claims 1 to 13 for connecting two electrodes, preferably two graphite electrodes.

18. An electrode string encompassing two or more graphite electrodes, wherein a respective two graphite electrodes are connected with each other by a connection piece (10) according to one of claims 1 to 13.

## Revendications

1. Pièce de liaison (10) pour raccorder des électrodes en graphite qui comprend au moins une zone (12) en graphite et au moins une zone (14, 14') en carbone renforcé de fibres de carbone, le graphite contenant moins de 10% en masse de fibres et le carbone renforcé de fibres de carbone contenant plus de 20% en masse de fibres de carbone.

2. Pièce de liaison (10) selon la revendication 1
**caractérisée en ce que**
le graphite contient moins de 5% en masse de fibres et de préférence aucune fibre.

3. Pièce de liaison (10) selon la revendication 1 ou 2
**caractérisée en ce que**
la moins une zone (14, 14') en carbone renforcé de fibres de carbone, est entourée au moins partiellement de la au moins une zone (12) en graphite.

4. Pièce de liaison (10) selon au moins une quelconque des revendications précédentes
**caractérisée en ce que**
la au moins une zone (12) en graphite est un corps en graphite (12) dans lequel est prévu au moins un évidement (14, 14') pour laquelle dans le au moins un évidement (14, 14') le carbone renforcé de fibres de carbone est prévu.

5. Pièce de liaison (10) selon au moins une quelconque des revendications précédentes
**caractérisée en ce que**
le matériau prévu dans le au moins un évidement (14, 14') en carbone renforcé de fibres de carbone est relié au corps en graphite (12) par un liant.

6. Pièce de liaison (10) selon au moins une quelconque des revendications précédentes
**caractérisée en ce que**
les fibres de carbone sont présentes dans le matériau en carbone renforcé de fibres de carbone sous la forme d'un tissu ou d'un stratifié de tissu dans lequel plusieurs couches de tissu sont disposées l'une sur l'autre et reliées entre elles.

7. Pièce de liaison (10) selon au moins une quelconque des revendications précédente
**caractérisée en ce que**
le pourcentage en masse de fibres de carbone dans le matériau en carbone renforcé de fibres de carbone est supérieur à 20 jusqu'à 80 %, en particulier de préférence 30 à 70% et tout particulièrement de préférence 40 à 60 %.

8. Pièce de liaison (10) selon au moins une quelconque des revendications précédente **caractérisée en ce que**
le au moins un évidement (14, 14') s'étend vers l'intérieur dans le sens longitudinal de la pièce de liaison (10) et s'étend transversalement au sens longitudinal de la pièce de liaison (10), du côté extérieur (16) du corps en graphite (12).

9. Pièce de liaison (10) selon au moins une quelconque des revendications précédente
**caractérisée en ce que**
le au moins un évidement (14, 14') s'étend sur au moins 50%, de préférence sur au moins 70%, en particulier de préférence sur au moins 90% et tout particulièrement de préférence sur 100% du sens longitudinal du corps en graphite (12).

10. Pièce de liaison (10) selon au moins une quelconque des revendications précédente
**caractérisée en ce que**
le au moins un évidement (14, 14') s'étend vers l'intérieur, transversalement au sens longitudinal du corps en graphite (12), du côté extérieur (16) du corps en graphite (12) sur 10 à moins de 100%, de préférence 20 à 80%, en particulier de préférence 30 à 70% et tout particulièrement de préférence 40 à 70% de l'intervalle entre le côté extérieur (16) et l'axe central (18) du corps en graphite (12).

11. Pièce de liaison (10) selon au moins une quelconque des revendications précédente
**caractérisée en ce que**
le volume entier de tous les évidements (14, 14'), en se référant au volume entier de la pièce de liaison (10), comporte 5 à 75%, de préférence 10 à 50% et tout particulièrement de préférence 20 à 40%.

12. Pièce de liaison (10) selon au moins une quelconque des revendications précédente
**caractérisée en ce que**
le corps en graphite (12) présente 2 à 50 évidements (14, 14'), de préférence 2 à 32 évidements (14, 14'), en particulier de préférence 5 à 32 évidements (14, 14') et de préférence maximum 8 à 24 évidements (14, 14') qui sont remplis du matériau en carbone renforcé de fibres de carbone.

13. Pièce de liaison (10) selon au moins une quelconque des revendications précédente
**caractérisée en ce que**
celle-ci est constituée de forme cylindrique ou sous la forme d'un bicône.

14. Procédé pour fabriquer un pièce de liaison (10) selon une quelconque des revendications 1 à 13 qui comprend les phases suivantes :
i) préparation d'un corps en graphite (12) qui ne contient pas ou contient moins de 10% en masse de fibres,
ii) préparation d'un matériau en carbone renforcé de fibres de carbone qui contient plus de 20% en masse de fibres,
iii) liaison du corps en graphite (12) avec le matériau en carbone renforcé de fibres de carbone au moyen d'un liant et
iv) mise en place d'un filetage sur la structure obtenue dans la phase iii).

15. Procédé selon la revendication 14 comprenant les phases suivantes :
a) préparation d'un corps en graphite (12), de préférence sous la forme d'un cylindre ou d'un bicône,
b) prévision d'au moins un évidement (14, 14') dans le corps en graphite (12) par usinage du corps en graphite (12),
c) préparation d'un carbone renforcé de fibres de carbone sous la forme d'au moins un évidement (14, 14'),
d) introduction d'un liant et du carbone renforcé de fibres de carbone dans le au moins un évidement (14, 14'),
e) traitement thermique de la structure obtenue dans la phase d) et
f) mise en place d'un filetage dans la structure obtenue dans la phase e).

16. Procédé selon la revendication 14 ou 15
**caractérisée en ce que**
le traitement thermique de la phase e) est effectué à une température se situant entre 100 et 300° C.

17. Utilisation d'une pièce de liaison (10) selon une quelconque des revendications 1 à 13 pour relier deux électrodes, de préférence de deux électrodes en graphite.

18. Chaîne d'électrodes comprenant deux ou plusieurs électrodes en graphite, deux électrodes en graphite étant à chaque fois reliées entre elles par une pièce de liaison (10) selon une quelconque des revendications 1 à 13.
